# EUROPÄISCHE PATENTANMELDUNG

(11) **EP 4 443 585 A1**
(43) Veröffentlichungstag der Anmeldung: **09.10.2024**
(21) Anmeldenummer: 23166421.0
(22) Anmeldetag: 04.04.2023
(51) Int. Cl.: H01M 10/0525, H01M 50/213, H01M 50/224, H01M 50/249, H01M 50/278, H01M 50/291, H01M 50/293, H01M 50/296, H01R 13/405, H01R 13/52

(54) **STECKVERBINDER FÜR EINEN AKKUMULATOR**

(71) Anmelder: VARTA Microbattery GmbH, 73479 Ellwangen Jagst (DE)
(72) Erfinder: Geiss, Matthias, 73485 Unterschneidheim-Zipplingen (DE); Rauwolf, Andreas, 86742 Fremdingen (DE)
(74) Vertreter: Ostertag & Partner Patentanwälte mbB

(57) **Zusammenfassung**

Es wird ein Steckverbinder (10) für einen Akkumulator (100) vorgeschlagen, wobei der Akkumulator ein Gehäuse und eine Mehrzahl von elektrochemischen Energiespeicherelementen umfasst. Der Steckverbinder (10) wird von einem Kunststoffspritzgussteil gebildet. In das Kunststoffspritzgussteil sind metallische Kontaktelemente eingebettet. Der Steckverbinder zeichnet sich dadurch aus, dass das Kunststoffspritzgussteil als Endkappe für das Gehäuse des Akkumulators (100) ausgebildet ist. In bevorzugten Ausführungsformen ist der Steckverbinder (10) mit mindestens einer eingespritzten Dichtung versehen.

## Beschreibung

Die vorliegende Erfindung betrifft einen Steckverbinder für einen Akkumulator, insbesondere für einen Fahrrad-Akkumulator, sowie einen Akkumulator mit einem solchen Steckverbinder.

### ANWENDUNGSGEBIET UND STAND DER TECHNIK

Fahrräder mit elektromotorischer Unterstützung sind weit verbreitet. Dabei dient der Elektromotor vor allem als Anfahrhilfe und zur Unterstützung der Kurbelbewegung. Es ist aber auch eine vollständige Traktionsübernahme durch den Elektromotor möglich.

Für die Energieversorgung des Elektromotors benötigt man in der Regel eine wiederaufladbare Batterie, oft auch als Akkumulator bezeichnet. Diese umfasst eine Mehrzahl von wiederaufladbaren (sekundären) elektrochemischen Energiespeicherelementen, beispielsweise Lithium-Ionen-Zellen, die innerhalb der Batterie elektrisch miteinander verschaltet sind. Solche Batterien weisen naturgemäß eine begrenzte Speicherkapazität auf, so dass sie regelmäßig geladen werden müssen.

Für die Aufladung von Fahrrad-Akkumulatoren werden Ladegeräte verwendet, die in der Regel an einen Haushalts-Stromnetzanschluss angeschlossen werden. Fahrrad-Akkumulatoren sind meistens als Wechsel-Akkumulatoren ausgebildet, die mit geeigneten Steckverbindungen sowohl ans Fahrrad als auch an dem Ladegerät mit wenigen Handgriffen angeschlossen werden können.

Energiespeicher bzw. Akkumulatoren für Fahrräder umfassen oftmals ein längliches Gehäuse, in dem die Energiespeicherelemente enthalten sind. Der für die elektrischen Verbindungen notwendige, in der Regel weibliche Steckverbinder eines Akkumulators wird üblicherweise bei der Fertigung von Akkumulatoren in eine Endkappe oder an einer anderen Position des Gehäuses eingesetzt und dort durch Verschraubung fixiert. Beispielsweise zeigt die DE 102021211776 B3 einen solchen länglichen Akkumulator, bei dem in eine stirnseitige Endkappe des Gehäuses ein weiblicher Steckverbinder durch Verschraubung fixiert ist.

Wichtig bei solchen Akkumulatoren ist, dass die Akkumulatoren und insbesondere das Gehäuse des Akkumulators dicht gegenüber eindringender Feuchtigkeit sind. Dies gilt in besonderem Maße, da Elektrofahrräder in der Regel der Witterung ausgesetzt sind und auch bei Regen geschützt sein müssen. Es ist daher notwendig, dass die Schnittstellen zwischen den verschiedenen Bauteilen des Gehäuses, also insbesondere zwischen dem Gehäusemantel und den stirnseitigen Verschlusselementen (Endkappen), und die Schnittstellen zwischen dem Steckverbinder und dem Gehäuse zuverlässig abgedichtet sind. Im Hinblick auf eine gute Abdichtung ist dabei auch eine exakte Passung der verschiedenen Bauteile, die das Gehäuse bilden, in der Fertigung sicherzustellen.

In der Praxis kann eine Gewährleistung der Dichtigkeit des Akkumulators unter Umständen schwierig sein, insbesondere wenn es um eine schnelle und kostengünstige Produktion von Akkumulatoren gehen soll.

### AUFGABE UND LÖSUNG

Vor diesem Hintergrund stellt sich die Erfindung die Aufgabe, einen Akkumulator und einen Steckverbinder für einen Akkumulator bereitzustellen, der eine besonders einfache und kostengünstige Produktion von Akkumulatoren erlaubt, wobei gleichzeitig die Dichtigkeit und eine Passgenauigkeit der Bauteile des Akkumulators in besonders vorteilhafter Weise erreicht werden sollen.

Diese Aufgabe wird durch einen Steckverbinder für einen Akkumulator gelöst, wie er sich aus dem Anspruch 1 ergibt. Weiterhin wird diese Aufgabe durch einen Akkumulator gemäß dem weiteren unabhängigen Anspruch gelöst. Vorteilhafte Ausgestaltungen des Steckverbinders und des Akkumulators sind Gegenstand der abhängigen Ansprüche.

Der erfindungsgemäße Steckverbinder ist für einen Akkumulator vorgesehen. Ein solcher Akkumulator ist mit einem Gehäuse ausgestattet, in dem eine Mehrzahl von elektrochemischen Energiespeicherelementen enthalten ist. Der erfindungsgemäße Steckverbinder weist dabei die folgenden Merkmale auf:
a. Der Steckverbinder wird von einem Kunststoffspritzgussteil gebildet.
b. In das Kunststoffspritzgussteil sind metallische Kontaktelemente eingebettet.
   Erfindungsgemäß ist der Steckverbinder weiter dadurch gekennzeichnet, dass
c. das Kunststoffspritzgussteil als Endkappe für das Gehäuse des Akkumulators ausgebildet ist.

Der erfindungsgemäße Steckverbinder integriert also zwei Funktionen in sich, zum einen die Funktion zur Herstellung von Strom- und/oder Datenverbindungen, und zum anderen eine Verschlussfunktion für das Gehäuse.

Der besondere Vorteil des erfindungsgemäßen Steckverbinders liegt darin, dass der Steckverbinder selbst Teil des Gehäuses des Akkumulators ist. Das als Endkappe ausgebildete Kunststoffspritzgussteil bildet ein stirnseitiges Verschlusselement für das Gehäuse des Akkumulators. Diese Endkappe integriert die Funktion eines Verschlusses des Gehäuses und die Funktion eines Steckverbinders bzw. einer Kontaktiereinrichtung für die elektrische Verschaltung des Akkumulators in einem einzigen Bauteil.

Damit wird bei der Produktion eines solchen Akkumulators die Anzahl der Bauteile reduziert, da nicht mehr, wie herkömmlicherweise, der Steckverbinder zunächst in die Endkappe eingebaut werden muss, zum Beispiel eingeschraubt oder eingeklipst, bevor das Gehäuse mit der Endkappe als Gehäusedeckel verschlossen werden kann. Bei der erfindungsgemäßen Lösung entfällt vollständig der Schritt der Montage des Steckverbinders in die Endkappe.

Ein weiterer Vorteil des erfindungsgemäßen Steckverbinders ist, dass die Notwendigkeit einer Abdichtung zwischen Steckverbinder und Endkappe entfällt. Das Problem einer Abdichtung zwischen Steckverbinder und Endkappe tritt daher bei der erfindungsgemäßen Lösung nicht mehr auf.

Zudem ist eine genaue Passung zwischen den herkömmlicherweise zwei Teilen, also Steckverbinder und Endkappe, bei der erfindungsgemäßen Lösung überflüssig. In der Fertigung spielen die Toleranzen von einzelnen Bauteilen eine große Rolle. Von daher ist die einstückige Fertigung des erfindungsgemäßen besonders vorteilhaft, da hierbei das Problem von Fertigungstoleranzen nicht auftritt.

Zusammenfassend sind im Vergleich mit der herkömmlichen Vorgehensweise bei der Herstellung eines Akkumulators bei der erfindungsgemäßen Lösung weniger Teile in der Montage erforderlich. Zudem entfällt die Dichtfläche zwischen dem Steckverbinder und der Endkappe. Darüber hinaus sind keine Schrauben für die Befestigung des Steckverbinders in der Endkappe erforderlich. Solche Schraubverbindungen haben immer den Nachteil, dass sie sich lösen können, insbesondere, wenn der Akkumulator Erschütterungen ausgesetzt ist, wie es bei der Anwendung als Fahrrad-Akkumulator in größerem Maß der Fall ist. Dieser Nachteil tritt bei der erfindungsgemäßen Lösung nicht auf.

Je nach Dimension und Form des zu fertigenden Akkumulators kann das Kunststoffspritzgussteil, das den Steckverbinder bildet und das gleichzeitig die stirnseitige Verschlusselementfunktion hat, unterschiedlich ausgebildet sein. Besonders bevorzugt ist eine flächige Ausbildung der Endkappe. Beispielsweise kann das Spritzgussteil einen im Wesentlichen rechteckförmigen und flachen Aufbau zeigen, insbesondere wenn das übrige Gehäuse des Akkumulators einen rechteckförmigen Querschnitt aufweist.

Vorzugsweise umfasst der Steckverbinder eine Buchse zur Aufnahme eines männliches Steckverbinders, vorzugsweise in einem zentralen Bereich des Kunststoffspritzgussteils. Der erfindungsgemäße Steckverbinder ist entsprechend bevorzugt ein weiblicher Steckverbinder. In besonders bevorzugten Ausführungsformen umfasst die Buchse eine umlaufende Vertiefung, die als Führung für das einzusteckende Gegenstück des erfindungsgemäßen Steckverbinders dient.

Durch die im Vergleich mit herkömmlichen Steckverbindern größere Grundfläche des Kunststoffspritzgussteils, das den erfindungsgemäßen Steckverbinder bildet, ist bei der erfindungsgemäßen Lösung ein flexibleres Steckverbinderdesign möglich, da mehr Fläche zur Verfügung steht. Zudem baut der erfindungsgemäße Steckverbinder weniger in der Tiefe als eine herkömmliche Endkappe mit separatem Steckverbinder. Auch dies bietet einen besonderen Vorteil, da bei der erfindungsgemäßen Lösung somit mehr freies Innenvolumen im Gehäuse für beispielsweise die Energiespeicherelemente oder deren Verschaltung zur Verfügung steht.

In einer besonders bevorzugten Ausgestaltung des erfindungsgemäßen Steckverbinders ist der Steckverbinder mit dem folgenden zusätzlichen Merkmal ausgestattet:
a. Das Kunststoffspritzgussteil ist mit mindestens einer eingespritzten Dichtung versehen.

Das Merkmal der eingespritzten Dichtungen für das Kunststoffspritzgussteil, das den erfindungsgemäßen Steckverbinder bildet, ist besonders vorteilhaft, da hiermit ein weiterer Montageschritt, nämlich das Einsetzen von Dichtungen, bei der Produktion eines Akkumulators mit dem erfindungsgemäßen Steckverbinder entfällt. Das Einspritzen der Dichtungen kann im Zuge des Kunststoffspritzvorgangs erfolgen, so dass hierfür kein zusätzlicher Arbeitsschritt erforderlich ist.

In besonders vorteilhaften Ausführungsformen des erfindungsgemäßen Steckverbinders im Hinblick auf die Dichtungen ist mindestens eines der folgenden zusätzlichen Merkmale vorgesehen:
a. Die mindestens eine eingespritzte Dichtung umfasst mindestens eine umlaufende Dichtung, die an einem Außenrand des Kunststoffspritzgussteils angeordnet ist.
b. Die mindestens eine eingespritzte Dichtung umfasst Dichtungen im Bereich von Bohrungen oder Durchbrechungen innerhalb des Kunststoffspritzgussteils.

In besonders bevorzugter Weise sind die vorgenannten Merkmale a. und b. in Kombination miteinander realisiert.

Die eingespritzten Dichtungen am Außenrand des Kunststoffspritzgussteils gemäß dem vorgenannten Merkmal a. dienen zur Abdichtung des Steckverbinders bzw. des von dem Steckverbinder gebildeten Verschlusselements gegenüber dem übrigen Gehäuse des Akkumulators.

Die eingespritzten Dichtungen im Bereich der Bohrungen oder Durchbrechungen in dem Kunststoffspritzgussteil gemäß dem vorgenannten Merkmal b. können insbesondere zur Abdichtung von Bohrungen oder Durchbrechungen dienen, die als Schraubendurchführungen in dem Steckverbinder vorgesehen sind. Diese Schraubendurchführungen können insbesondere für eine Verschraubung des eine Endkappe ausbildenden Steckverbinders mit dem übrigen Gehäuse dienen.

In besonders bevorzugten Ausführungsformen sind die Dichtungen des Steckverbinders und insbesondere die eingespritzten Dichtungen aus thermoplastischem Kunststoff gebildet, beispielsweise aus thermoplastischem Polyurethan oder Vergleichbarem.

In weiteren, besonders bevorzugten Ausführungsformen des erfindungsgemäßen Steckverbinders ist der Steckverbinder mit mindestens einem der folgenden zusätzlichen Merkmale ausgestattet:
a. Das Kunststoffspritzgussteil umfasst mechanische Halte- und/oder Führungselemente für eine Halterung des Akkumulators.
b. Die Halte- und/oder Führungselemente sind Vertiefungen und/oder Erhebungen in der Fläche des Kunststoffspritzgussteils.
c. Die Halte- und/oder Führungselemente sind Rastelemente.

In besonders bevorzugter Weise sind die vorgenannten Merkmale a. und b. oder, ganz besonders bevorzugt, die vorgenannten Merkmale a., b. und c. in Kombination miteinander realisiert.

In diesen Ausgestaltungen kann die Batterieaufnahme bzw. Akkumulatoraufnahme in das Kunststoffspritzgussteil, das den erfindungsgemäßen Steckverbinder bildet, durch Ausbildung entsprechender Führungs- und/oder Halteelemente integriert werden, ohne dass die Steckergeometrie selbst einer direkten Lasteinwirkung ausgesetzt ist. Die äußere Fläche des Kunststoffspritzgussteils bietet verschiedene Möglichkeiten für geeignete Geometrien, die für eine Führung des Akkumulators geeignet sind.

Die Halte- und/oder Führungselemente können beispielsweise von einer oder mehreren rinnenförmigen Vertiefungen in der Fläche des Steckverbinders gebildet werden.

Besonders bevorzugt sind in das Kunststoffspritzgussteil integrierte Rastelemente, mit denen der Akkumulator mit wenigen Handgriffen beispielsweise am Rahmen eines Fahrrads sicher fixiert und verankert werden kann.

In besonders bevorzugten Ausführungsformen weist der erfindungsgemäße Steckverbinder das folgende zusätzliche Merkmal auf:
a. Die metallischen Kontaktelemente sind für eine Stromleitung und/oder für eine Signalleitung eingerichtet.

Geeignete Kontaktelemente sind dem Fachmann bekannt.

Die Erfindung umfasst weiterhin einen Akkumulator mit einer Mehrzahl von elektrochemischen Energiespeicherelementen und einem Gehäuse. Dieser Akkumulator zeichnet sich dadurch aus, dass das Gehäuse einen Steckverbinder gemäß der obigen Beschreibung umfasst, wobei der Steckverbinder die Funktion eines stirnseitigen Verschlusselements integriert.

Bezüglich weiterer Merkmale und Vorteile des Steckverbinders wird auch auf die obige Beschreibung verwiesen.

In besonders bevorzugten Ausführungsformen des erfindungsgemäßen Akkumulators zeichnet sich der Akkumulator durch mindestens eines der folgenden zusätzlichen Merkmale aus:
a. Der Akkumulator ist ein Wechsel-Akkumulator.
b. Der Akkumulator ist ein Akkumulator für ein elektrisches Fahrzeug.
c. Der Akkumulator ist ein Akkumulator für ein elektrisches Fahrrad.

Vorzugsweise sind die vorgenannten Merkmale a. und b. und, besonders bevorzugt, die vorgenannten Merkmale a. bis c. in Kombination miteinander realisiert.

In ganz besonders bevorzugter Weise ist der erfindungsgemäße Akkumulator ein Wechsel-Akkumulator, der mit wenigen Handgriffen mittels des erfindungsgemäßen Steckverbinders angeschlossen und wieder gelöst werden kann. So kann der Wechsel-Akkumulator je nach Bedarf an einen elektrischen Verbraucher und an eine Ladeeinrichtung zum Aufladen des Akkumulators angeschlossen werden.

Mit besonderem Vorteil kann der erfindungsgemäße Akkumulator für ein elektrisches Fahrzeug eingesetzt werden, beispielsweise für einen elektrischen Roller, einen elektrischen Rollstuhl oder andere elektrische Fahrzeuge. Weiterhin kann der Akkumulator beispielsweise für die Energieversorgung eines Roboters, beispielsweise eines Serviceroboters oder für Ähnliches, verwendet werden.

In ganz besonders bevorzugten Ausführungsformen handelt es sich bei dem erfindungsgemäßen Akkumulator um einen Akkumulator für ein elektrisches Fahrrad. Insbesondere bei einem elektrischen Fahrrad kommen die besonderen Vorteile des erfindungsgemäßen Akkumulators besonders zum Tragen. Bei dem erfindungsgemäßen Akkumulator wird eine besonders gute und einfach herzustellende Dichtigkeit des Akkumulators gegenüber eindringender Feuchtigkeit erreicht, weshalb der Akkumulator für ein elektrisches Fahrrad, das regelmäßig verschiedenen Witterungseinflüssen ausgesetzt ist, besonders gut geeignet ist.

Im Hinblick auf eine vorteilhafte Ausgestaltung des Gehäuses des erfindungsgemäßen Akkumulators zeichnet sich der Akkumulator insbesondere durch mindestens eines der folgenden zusätzlichen Merkmale aus:
a. Das Gehäuse umfasst eine metallische Röhre.
b. Das Gehäuse umfasst eine Röhre aus Aluminium.
c. Das Gehäuse umfasst eine metallische Röhre mit einem rechteckigen Querschnitt.

Vorzugsweise sind die vorgenannten Merkmale a. und b. und, besonders bevorzugt, die vorgenannten Merkmale a. bis c. in Kombination miteinander realisiert.

Ein metallisches Gehäuse hat den Vorteil, dass hierdurch eine besondere Stabilität des Akkumulators erreicht wird. Eine solche Stabilität wird regelmäßig bei einem Akkumulator beispielsweise für ein elektrisches Fahrrad bereits aus Sicherheitsgründen gefordert. Aluminium eignet sich besonders, da hierdurch das Gewicht des resultierenden Akkumulators verhältnismäßig geringgehalten werden kann. Darüber hinaus hat Aluminium den weiteren besonderen Vorteil, dass Aluminium gute Wärmeabführungseigenschaften aufweist, die für den erfindungsgemäßen Akkumulator vorteilhaft sind.

Besonders geeignet ist ein längliches Gehäuse mit einem rechteckigen Querschnitt, wobei das Gehäuse vorzugsweise von einer metallischen Röhre mit einem rechteckigen Querschnitt und zwei Endkappen, vorzugsweise aus Kunststoff, gebildet wird. Eine solche Form des Gehäuses gewährleistet zum einen eine hohe Stabilität und bietet zum anderen vorteilhafte Möglichkeiten zur Anordnung der Energiespeicherelemente innerhalb des Gehäuses. Die längliche Form des Akkumulators macht den Akkumulator weiterhin insbesondere für die Verwendung als Fahrrad-Akkumulator geeignet, da ein solches längliches Gehäuse in vorteilhafter Weise am oder im Bereich des Rahmens eines Fahrrads angebracht werden kann.

In besonders bevorzugten Ausgestaltungen des erfindungsgemäßen Akkumulators zeichnet sich der Akkumulator im Hinblick auf die elektrochemischen Energiespeicherelemente durch mindestens eines der folgenden zusätzlichen Merkmale aus:
a. Die elektrochemischen Energiespeicherelemente sind zylindrische Rundzellen.
b. Die elektrochemischen Energiespeicherelemente sind Lithium-Ionen-Energiespeicherelemente.
c. Die elektrochemischen Energiespeicherelemente sind innerhalb des Akkumulators in zwei bis vier, bevorzugt drei, parallel verschalteten Reihen mit jeweils 10 bis 20, bevorzugt 13, seriell verschalteten Energiespeicherelementen angeordnet.

Vorzugsweise sind die vorgenannten Merkmale a. und b. und, besonders bevorzugt, die vorgenannten Merkmale a. bis c. in Kombination miteinander verwirklicht.

Im Prinzip können für den erfindungsgemäßen Akkumulator alle herkömmlichen sekundären elektrochemischen Energiespeicherelemente eingesetzt werden, wobei hierbei neben Rundzellen vor allem auch prismatische Zellen infrage kommen. Besonders bevorzugt sind jedoch zylindrische Rundzellen. Der Vorteil der zylindrischen Rundzellen liegt vor allem darin, dass die Rundzellen sehr eng gepackt werden können, wobei dennoch zwischen den Rundzellen Freiräume verbleiben, die im Hinblick auf einen thermischen Ausgleich sehr vorteilhaft sind.

Besonders bevorzugt sind Lithium-Ionen-Energiespeicherelemente, da Lithium-Ionen-Energiespeicherelemente sich durch eine besonders große Energiedichte bei vergleichsweise niedrigem Gewicht auszeichnen. Allgemein basieren Lithium-Ionen-Energiespeicherelemente auf dem Einsatz von Lithium, welches in Form von Ionen zwischen den Elektroden des Elements hin und her wandern kann.

Die negative Elektrode und die positive Elektrode eines Lithium-Ionen-Energiespeicherelements werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Elemente kommen sämtliche Materialien in Frage, die Lithium-Ionen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Die Aktivmaterialien sind in der Regel als Schicht auf einem bandförmige Stromkollektor aufgebracht. Der Stromkollektor stellt dabei eine elektrochemisch inaktive Komponente des Energiespeicherelements dar. Als Stromkollektoren kommen insbesondere metallische Folien zum Einsatz, die als Träger für das jeweilige Aktivmaterial dienen. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Energiespeicherelemente meist Lösungen von Lithiumsalzen wie Lithiumhexafluorophosphat (LiPF₆) in organischen Lösungsmitteln (z. B. Ether und Ester der Kohlensäure).

Grundsätzlich kommen für den erfindungsgemäßen Akkumulator als sekundäre elektrochemische Energiespeicherelement auch Natrium-lonen-Zellen in Frage.

In zylindrischen Rundzellen sind die Elektroden der Zelle in der Regel in Form eines Wickels angeordnet, wobei zwischen den bandförmigen Elektroden mindestens ein bandförmiger Separator angeordnet ist. In anderen Ausführungsformen, insbesondere bei prismatischen Energiespeicherelementen, können die Elektroden auch in gestapelter Form vorliegen.

In besonders bevorzugter Weise sind die elektrochemischen Energiespeicherelemente des erfindungsgemäßen Akkumulators zylindrische Rundzellen, die innerhalb des Gehäuses mit paralleler Ausrichtung ihrer Längsachsen in einer Ebene in enger Packung angeordnet sind. Die Energiespeicherelemente können dabei insbesondere in mehreren Reihen angeordnet sein, wobei die Zellen einer Reihe jeweils seriell miteinander verschaltet sind. Die einzelnen Reihen können miteinander parallel verschaltet sein. Besonders bevorzugt sind die Energiespeicherelemente in zwei bis vier parallel verschalteten Reihen zu jeweils zehn bis zwanzig Energiespeicherelementen angeordnet. Beispielsweise können drei parallel verschaltete Reihen mit jeweils dreizehn Energiespeicherelementen vorgesehen sein, also insgesamt 39 Energiespeicherelemente. In anderen Ausführungsformen können beispielsweise drei Reihen mit jeweils 15 Energiespeicherelementen vorgesehen sein.

Weiterhin kann der erfindungsgemäße Akkumulator durch das folgende zusätzliche Merkmal gekennzeichnet sein:
a. Die elektrochemischen Energiespeicherelemente werden von Rahmen aus Kunststoff gehalten.

Der Rahmen aus Kunststoff gemäß dem vorgenannten Merkmal a. kann auch als Zellhalter bezeichnet werden. Ein solcher Rahmen hält und fixiert die Energiespeicherelemente innerhalb des Akkumulators und stabilisiert die Anordnung der Energiespeicherelemente beispielsweise auch bei einem Sturz oder anderen Erschütterungen. Das Kunststoffmaterial des Zellhalters sorgt für ein verhältnismäßig geringes Gewicht des Akkumulators, so dass ein solcher Zellhalter insbesondere für den Einsatz des Akkumulators als Fahrrad-Akkumulator geeignet ist. Geeignete Kunststoffmaterialien sind dem Fachmann bekannt.

In besonders bevorzugter Weise zeichnet sich der erfindungsgemäße Akkumulator weiterhin durch das folgende zusätzliche Merkmal aus:
a. Der Steckverbinder ist über Schraubverbindungen an den Rahmen aus Kunststoff fixiert.

Die Fixierung des Steckverbinders über Schraubverbindungen gemäß dem vorgenannten Merkmal a. dient zum einen der Befestigung des endkappenförmigen Steckverbinders an dem Gehäuse und damit zum Verschließen des Gehäuses. Die Fixierung der Schrauben, also beispielsweise selbstschneidender Schrauben, in dem Rahmen aus Kunststoff hat dabei den besonderen Vorteil, dass die bei der Verschraubung gegebenenfalls anfallenden Kunststoffspäne, die in das Innere des Gehäuses gelangen können, elektrisch unproblematisch sind und, anders als Metallspäne, nicht zu einem Kurzschluss oder zu anderen problematischen Verunreinigungen des Akkumulators führen können.

In dem Kunststoffspritzgussteil, das den Steckverbinder bildet, können beispielsweise vier Bohrungen vorgesehen sein, die für eine Verschraubung mit vier Schrauben zur Fixierung des endkappenförmigen Steckverbinders am Gehäuse und zum Verschluss des Gehäuses vorgesehen sind.

Weitere Merkmale und Vorteile der Erfindung ergeben sich aus der nachfolgenden Beschreibung von bevorzugten Ausführungsbeispielen in Verbindung mit den Zeichnungen. Hierbei können die einzelnen Merkmale jeweils für sich oder in Kombination miteinander realisiert sein.

In den Figuren zeigen:
- Fig. 1: Außenansicht eines erfindungsgemäßen Akkumulators;
- Fig. 2: Ansicht der Außenseite eines erfindungsgemäßen Steckverbinders;
- Fig. 3: Ansicht der Innenseite eines erfindungsgemäßen Steckverbinders;
- Fig. 4: Ansicht eines erfindungsgemäßen Akkumulators ohne Darstellung des Gehäuses; und
- Fig. 5: Außenansicht einer weiteren Ausführungsform eines erfindungsgemäßen Steckverbinders.

### BESCHREIBUNG VON AUSFÜHRUNGSBEISPIELEN

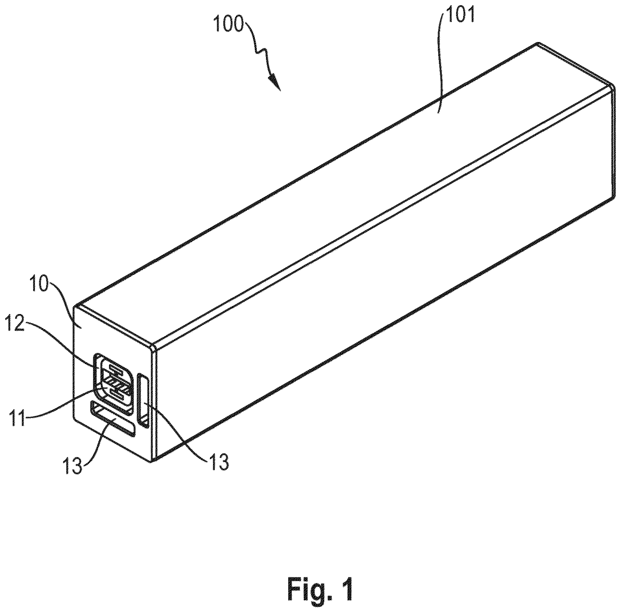

**Fig. 1** zeigt eine Außenansicht einer bevorzugten Ausführungsform eines erfindungsgemäßen Akkumulators 100. Das Gehäuse des Akkumulators 100 wird von einer metallischen Röhre 101, insbesondere einer Aluminiumröhre, gebildet, wobei die Röhre einen rechteckigen Querschnitt aufweist. Die dem Betrachter zugewandte Stirnseite des Akkumulators 100 ist von einem erfindungsgemäßen Steckverbinder 10 verschlossen.

Innerhalb der Röhre 101 sind die hier nicht sichtbaren elektrochemischen Energiespeicherzellen, vorzugsweise Lithium-Ionen-Zellen in Form von zylindrischen Rundzellen, angeordnet. Die elektrische Verschaltung der Energiespeicherzellen kann in an sich bekannter Weise über eine Elektronik in Form eines Batteriemanagementsystems, das von einer bestückten Platine gebildet wird, erfolgen.

Die Strom- und Signalführung der miteinander verschalteten Energiespeicherelemente nach außen erfolgt über die hier gezeigte Stirnseite des Akkumulators 100, die von dem erfindungsgemäßen Steckverbinder 10 gebildet und abgeschlossen wird. Der Steckverbinder 10 integriert dabei die Funktion eines Verschlusselements und die Funktion der Strom- und Signalführung innerhalb eines Bauteils.

Der gesamte Steckverbinder 10 wird von einem Kunststoffspritzgussteil gebildet, wobei in einem zentralen Bereich des Kunststoffspritzgussteils eine Buchse 11 ausgebildet ist. Die Buchse 11 umfasst ein Zentralteil und um dieses herum eine umlaufende Vertiefung 12. Die Vertiefung 12 dient als Führung für das einzusteckende Gegenstück des Steckverbinders 10.

An der hier nicht sichtbaren Innenseite des Steckverbinders 10 erfolgt eine Kontaktierung des Steckverbinders mit den verschalteten Energiespeicherzellen, beispielsweise direkt über die Platine, die das Batteriemanagementsystem bildet.

Weiterhin sind in dieser Ausführungsform des Steckverbinders 10 zwei rinnenförmige Vertiefungen 13 in der Außenfläche des Steckverbinders 10 vorgesehen. Diese Vertiefungen 13 bilden Halte- und/oder Führungselemente für die Halterung des Akkumulators 100, beispielsweise am Rahmen eines elektrischen Fahrrads. Die Vertiefungen 13 können dabei insbesondere als Positionierhilfen für die Anbringung des Akkumulators 100 am Fahrrad dienen.

Insgesamt kann das Gehäuse des Akkumulators 100 so ausgebildet sein, dass es von einer Aluminiumröhre und zwei Endkappen aus Kunststoff gebildet ist, wobei eine der Endkappen von dem erfindungsgemäßen Steckverbinder 10, der ein Kunststoffspritzgussteil ist, gebildet wird.

Der erfindungsgemäße Steckverbinder 10 hat neben der Strom- und/oder Signalführung die zusätzliche Funktion, das Gehäuse des Akkumulators 100 zu verschließen. Das übrige Gehäuse wird von der Aluminiumröhre 101 mit rechteckigem und beispielsweise quadratischem Querschnitt gebildet. Die dem Steckverbinder 10 gegenüberliegende Stirnseite des Gehäuses kann ebenfalls von einem Kunststoffspritzgussteil als weiterer Endkappe verschlossen sein. Wenn beide Stirnseiten des Akkumulators 100 von einem Kunststoffspritzgussteil verschlossen sind, hat dies neben einem optisch ansprechenden Design weiterhin den Vorteil, dass hierdurch das Gewicht des Akkumulators 100 besonders geringgehalten werden kann. Alternativ können auch die Endstücke aus Aluminium oder einem anderen Metall gebildet sein.

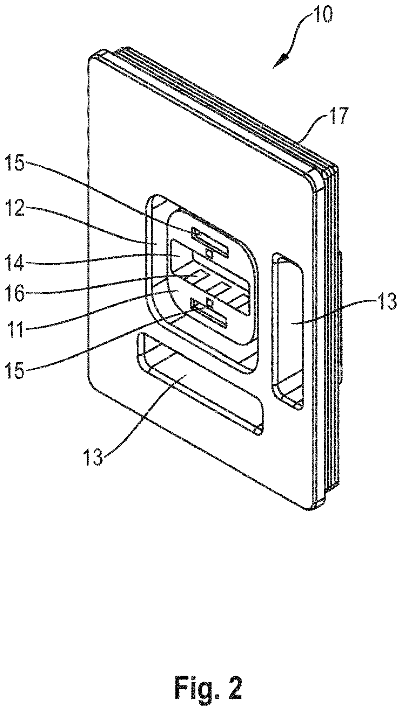

**Fig. 2** zeigt eine isolierte Darstellung des erfindungsgemäßen Steckverbinders 10. In Anpassung an einen Gehäusegrundkörper mit rechteckigem Querschnitt weist der erfindungsgemäße Steckverbinder 10 eine Rechteckform auf, so dass er als stirnseitiges Verschlusselement für einen entsprechenden Gehäusekörper geeignet ist. Im zentralen Bereich der äußeren Fläche des Steckverbinders 10 befindet sich die bereits anhand der Fig. 1 erläuterte Buchse 11 mit dem Zentralteil und um dieses herum der umlaufenden Vertiefung 12.

Das Zentralteil umfasst eine größere Steckeraufnahme 14 und zwei vergleichsweise kleinere Steckeraufnahmen 15 aus. In die Steckeraufnahmen 14, 15 sind jeweils metallische Kontaktelemente 16 eingebettet, jedoch in unterschiedlichen Formen. Die größere Steckeraufnahme 14 ist mit insgesamt 6 Kontaktelementen 16 für eine Datensignalführung vorgesehen. Die kleineren Steckeraufnahmen 15 sind beide zur Stromführung (Plus- und Minuspol) vorgesehen.

Der äußere Rand des Steckverbinders 10 ist mit einer umlaufenden Dichtung 17 ausgestattet. Bei der Dichtung 17 handelt es sich vorzugsweise um eine eingespritzte Dichtung aus einem thermoplastischen Kunststoff. Die Herstellung dieser Kunststoffdichtung kann in den Prozess des Kunststoffspritzgusses integriert werden. Die eingespritzte Dichtung 17 hat den besonderen Vorteil, dass bei der Montage des Gehäuses der Arbeitsschritt des Einsetzens von separaten Dichtungen vollständig entfällt. Vorteilhafterweise handelt es sich bei dem Steckverbinder 10 also im Wesentlichen um ein Zweikomponenten(2K)-Spritzgussteil. Als weitere Komponente befinden sich in dem Steckverbinder 10 die metallischen Kontaktelemente 16.

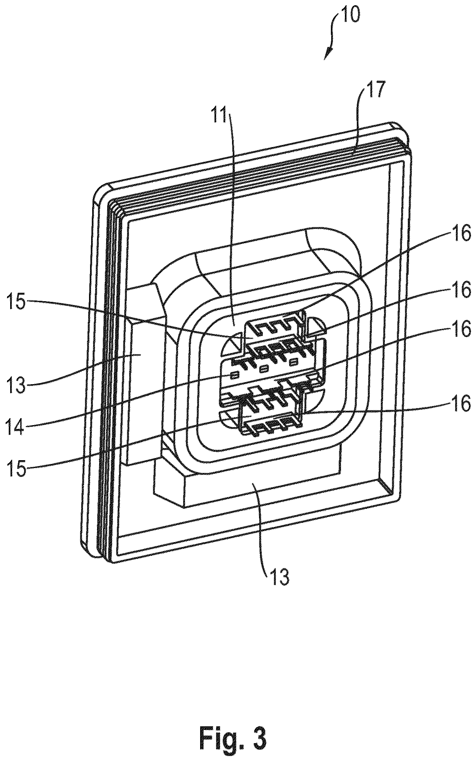

**Fig. 3** zeigt eine rückwärtige Ansicht des erfindungsgemäßen Steckverbinders 10 mit der Rückseite der Buchse 11 und der Rückseite der rinnenförmigen Vertiefungen 13 und der umlaufenden Dichtung 17. Zu erkennen sind die rückwärtigen Seiten der metallischen Kontaktelemente 16, die in die Steckerschalen 14 und 15 eingesetzt sind und die für die Kontaktierung des Steckverbinders 10 mit der Elektronik der Energiespeicherzellen vorgesehen sind.

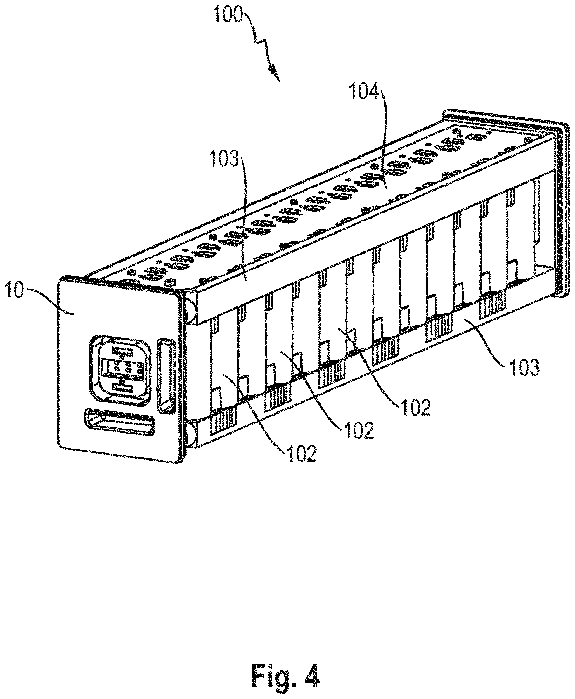

**Fig. 4** zeigt eine Außenansicht des erfindungsgemäßen Akkumulators 100 aus Fig. 1 mit dem Steckverbinder 10, wobei das Gehäuse des Akkumulators nicht gezeigt ist. Zu erkennen sind die im Inneren des Akkumulators enthaltenden zylindrischen Rundzellen 102. Es sind insgesamt 39 zylindrische Rundzellen 102 vorgesehen, die in drei Reihen zu jeweils dreizehn Rundzellen angeordnet sind. Die einzelnen Rundzellen 102 stehen aufrecht und sind mit paralleler Ausrichtung der Längsachsen in enger Packung angeordnet. Die Rundzellen102 werden über einen oberen und unteren Rahmen aus Kunststoff (Zellhalter 103) eingefasst und können zur Fixierung mit den Rahmen verklebt sein. Die elektrische Verschaltung der Rundzellen 102 erfolgt über eine Elektronik in Form eines Batteriemanagementsystems, das von einer bestückten Platine 104 gebildet wird. Das Batteriemanagementsystem bzw. die Platine 104 ist auf der rückwärtigen Seite des Steckverbinders 10 elektrisch angebunden.

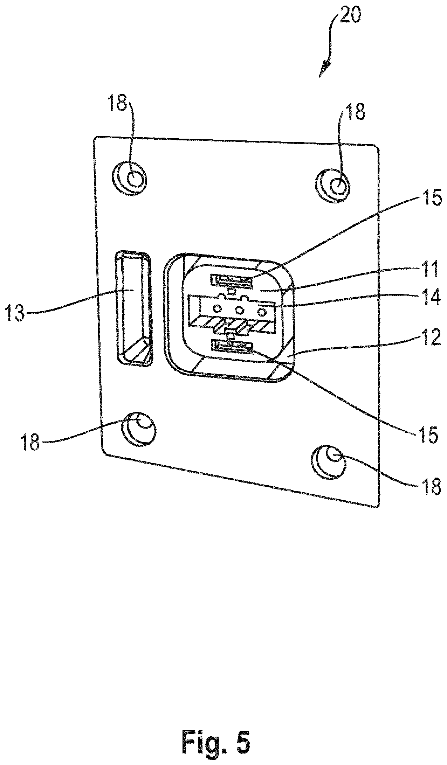

**Fig. 5** zeigt eine weitere Ausführungsform eines Steckverbinders 20, der in weiten Teilen mit dem Steckverbinder 10 vergleichbar ist. Die entsprechenden Elemente des Steckverbinders 20 sind mit den gleichen Bezugszeichen wie bei dem Steckverbinder 10 bezeichnet. Im Unterschied zu dem anhand der Fig. 2 erläuterten Steckverbinder 10 ist in dem Steckverbinder 20 nur eine rinnenförmige Vertiefung 13 vorgesehen, die als Positionierhilfe für die Anbringung des mit dem Steckverbinder 20 ausgestatteten Akkumulators an einem Fahrrad dient.

Im Vergleich mit dem Steckverbinder 10 ist bei dem Steckverbinder 20 zusätzlich in den Eckbereichen des Steckverbinders 20 jeweils eine Bohrung 18 vorgesehen. Die Bohrungen 18 sind zur Durchführung von Schrauben vorgesehen, mittels derer der Steckverbinder 20 an dem übrigen Gehäuse (Röhre 101) des Akkumulators befestigt wird. Vorzugsweise ist dabei eine Verschraubung mit den im Inneren des Gehäuses angeordneten Kunststoff-Zellhaltern 103 vorgesehen, so dass die Verschraubung ausschließlich in Kunststoff geführt ist. Der Steckverbinder 20 wird durch die Verschraubung an den Zellhaltern also indirekt mit dem Gehäusemantel verbunden. Die ausschließliche Verschraubung in Kunststoff hat den Vorteil, dass keine metallischen Späne anfallen können, die elektrisch kritisch sein könnten.

Die Bohrungen 18 sind jeweils mit einer hier nicht näher dargestellten Dichtung ausgestattet, wobei es sich bei diesen Dichtungen vorzugsweise um eingespritzte Dichtungen handelt.

## Patentansprüche

1. Steckverbinder (10; 20) für einen Akkumulator (100) mit einem Gehäuse und einer Mehrzahl von elektrochemischen Energiespeicherelementen (102) mit den folgenden Merkmalen:
a. Der Steckverbinder (10; 20) wird von einem Kunststoffspritzgussteil gebildet;
b. in das Kunststoffspritzgussteil sind metallische Kontaktelemente (16) eingebettet,
**dadurch gekennzeichnet, dass**
c. das Kunststoffspritzgussteil als Endkappe für das Gehäuse des Akkumulators (100) ausgebildet ist.

2. Steckverbinder nach Anspruch 1 mit dem folgenden zusätzlichen Merkmal:
a. Das Kunststoffspritzgussteil ist mit mindestens einer eingespritzten Dichtung (17) versehen.

3. Steckverbinder nach Anspruch 2 mit mindestens einem der folgenden zusätzlichen Merkmale:
a. Die mindestens eine eingespritzte Dichtung umfasst mindestens eine umlaufende Dichtung (17), die an einem Außenrand des Kunststoffspritzgussteils angeordnet ist;
b. die mindestens eine eingespritzte Dichtung umfasst Dichtungen im Bereich von Bohrungen (18) oder Durchbrechungen innerhalb des Kunststoffspritzgussteils.

4. Steckverbinder nach Anspruch 2 oder Anspruch 3 mit dem folgenden zusätzlichen Merkmal:
a. Die mindestens eine eingespritzte Dichtung (17) ist aus thermoplastischem Kunststoff gebildet.

5. Steckverbinder nach einem der vorhergehenden Ansprüche mit mindestens einem der folgenden zusätzlichen Merkmale:
a. Das Kunststoffspritzgussteil umfasst mechanische Halte- und/oder Führungselemente (13) für eine Halterung des Akkumulators;
b. die Halte- und/oder Führungselemente (13) sind Vertiefungen und/oder Erhebungen in der Fläche des Kunststoffspritzgussteils;
c. die Halte- und/oder Führungselemente sind Rastelemente.

6. Steckverbinder nach einem der vorhergehenden Ansprüche mit dem folgenden zusätzlichen Merkmal:
a. Die metallischen Kontaktelemente (16) sind für eine Stromleitung und/oder für eine Signalleitung eingerichtet.

7. Akkumulator (100) mit einer Mehrzahl von elektrochemischen Energiespeicherelementen (102) und einem Gehäuse, **dadurch gekennzeichnet, dass** das Gehäuse einen Steckverbinder (10; 20) gemäß einem der vorhergehenden Ansprüche 1 bis 6 als stirnseitiges Verschlusselement umfasst.

8. Akkumulator nach Anspruch 7 mit mindestens einem der folgenden zusätzlichen Merkmale:
a. Der Akkumulator (100) ist ein Wechsel-Akkumulator;
b. der Akkumulator (100) ist ein Akkumulator für ein elektrisches Fahrzeug;
c. der Akkumulator (100) ist ein Akkumulator für ein elektrisches Fahrrad.

9. Akkumulator nach Anspruch 7 oder Anspruch 8 mit mindestens einem der folgenden zusätzlichen Merkmale:
a. Das Gehäuse umfasst eine metallische Röhre (101);
b. das Gehäuse umfasst eine Röhre (101) aus Aluminium;
c. das Gehäuse umfasst eine metallische Röhre (101) mit einem rechteckigen Querschnitt.

10. Akkumulator nach einem der Ansprüche 7 bis 9 mit mindestens einem der folgenden zusätzlichen Merkmale:
a. Die elektrochemischen Energiespeicherelemente (102) sind zylindrische Rundzellen;
b. die elektrochemischen Energiespeicherelemente (102) sind Lithium-Ionen-Zellen;
c. die elektrochemischen Energiespeicherelemente (102) sind innerhalb des Akkumulators (100) in zwei bis vier, bevorzugt drei, parallel verschalteten Reihen mit jeweils 10 bis 20, bevorzugt 13, seriell verschalteten Energiespeicherelementen angeordnet.

11. Akkumulator nach einem der Ansprüche 7 bis 10 mit dem folgenden zusätzlichen Merkmal:
a. Die elektrochemischen Energiespeicherelemente (102) werden von Rahmen (103) aus Kunststoff gehalten.

12. Akkumulator nach Anspruch 11 mit dem folgenden zusätzlichen Merkmal:
a. Der Steckverbinder (10; 20) ist über Schraubverbindungen an den Rahmen (103) aus Kunststoff fixiert.
